# EUROPÄISCHE PATENTSCHRIFT

(11) **EP 0 615 804 B1**
(45) Veröffentlichungstag und Bekanntmachung des Hinweises auf die Patenterteilung: **03.09.1997**
(21) Anmeldenummer: 94103097.5
(22) Anmeldetag: 02.03.1994
(51) Int. Cl.: B23B 3/10, B23Q 11/00

(54) **Senkrechtdreh- und/oder -fräsmaschine**
Process and device for drawing metallic blanks for the manufacture of so-called deep drawn pieces
Tour et/ou fraiseuse verticale

(30) Priorität: 19.03.1993 DE 4308952; 19.01.1994 DE 4401431
(43) Veröffentlichungstag der Anmeldung: 21.09.1994
(73) Patentinhaber: DÖRRIES SCHARMANN GmbH, D-41236 Mönchengladbach (DE)
(72) Erfinder: Haffner, Rolf, D-52349 Düren (DE); Werheid, Franz, D-53894 Mechernich (DE); Kniprath, August, D-52372 Kreuzau (DE)
(74) Vertreter: Rehders, Jochen, Dipl.-Ing.

(56) Entgegenhaltungen:
- CH-A- 302 984
- DE-A- 1 950 189
- DE-A- 2 720 876
- US-A- 3 317 258

## Beschreibung

Die Erfindung betrifft eine Senkrechtdreh- und/oder -fräsmaschine mit einer auf einem Untersatz drehbar angeordneten, angetriebenen Planscheibe nach dem Oberbegriff des Anspruchs 1. Eine derartige Werkzeugmaschine ist in der DE-A-27 20 876 beschrieben.

Die Anforderungen an die Genauigkeit derartiger Werkzeugmaschinen werden immer höher, da sich während des Betriebes einstellende Veränderungen bei einer CNC-gesteuerten Werkstückbearbeitung nur schwierig ausgleichen lassen. Zwar ist es möglich, eine Temperaturabhängigkeit der Höhenlage der Planscheibe zu berücksichtigen, indem Temperaturfühler an geeigneter Stelle der Werkzeugmaschine angeordnet und dazu benutzt werden, ein Korrekturglied in der Steuerung der Werkzeugmaschine anzusteuern. Selbst wenn sich aufgrund von Temperaturunterschieden zwischen der Oberseite und der Unterseite der Planscheibe eine Wölbung einstellt, die dazu führt, daß die kühlere Oberseite der Planscheibe konkav wird, läßt sich dies dadurch ausgleichen, daß die Planscheibenoberfläche entsprechend konvex bearbeitet wird.

Beide Maßnahmen setzten indessen voraus, daS sich die Werkzeugmaschine und insbesondere die Planscheibe in einem stationären Beharrungszustand befindet, d. h. in einem Zustand, in dem sich eine bestimmte, die konkave Wölbung der Planscheibe bewirkende Temperaturdifferenz zwischen der Unterseite und der Oberseite der Planscheibe einstellt.

Die Temperaturdifferenz zwischen der Unterseite und der Oberseite der Planscheibe ergibt sich daraus, daß sich insbesondere das hochbelastete Axiallager für die Planscheibe erwärmt. Des weiteren wird der Unterseite der Planscheibe Wärme über die Antriebsverzahnung zugeführt. Da die Unterseite der Planscheibe einer Senkrechtdreh- und/oder -fräsmaschine weitgehend gegenüber der Umgebung abgedichtet ist, um zu verhindern, daß Kühlflüssigkeit und Späne in den Bereich der Antriebsverzahnung und der Lager gelangen, wird die hier entwickelte Wärme im wesentlichen zur Unterseite der Planscheibe geleitet. Dem gegenüber wird die Oberseite der Planscheibe während der Drehung durch die Umgebungsluft gekühlt, da die Planscheibe mit den darauf angeordneten Werkstücken eine starke, die Planscheibenoberseite abkühlende Luftbewegung erzeugt. Dies führt dazu, daß die Unterseite der Planscheibe eine höhere Temperatur als die Oberseite aufweist, sich stärker dehnt und die konkave Wölbung der Planscheibenoberseite bewirkt. Es wurde festgestellt, daß der Höhenunterschied zwischen dem mittleren Bereich und dem Umfangsbereich der Planscheibenoberseite bei einem Durchmesser der Planscheibe von 4,5 m bis zu 0,08 mm je Grad Temperaturdifferenz betragen kann.

Wie bereits erwähnt, ließe sich diese Wölbung der Planscheibenoberseite ausgleichen, wenn die Werkzeugmaschine stets im stationärem Zustand betrieben würde. Dies ist aber nicht der Fall, da die Wärmeentwicklung auf der Unterseite der Planscheibe von der Last auf der Planscheibe, der Drehzahl der Planscheibe, der eingebrachten Antriebsleistung und der Benutzungsdauer abhängt. Alle diese Parameter sind variabel, da sie von den zu bearbeitenden Werkstücken, der Bearbeitungsdauer und den Rüstzeiten abhängen. Es ergibt sich somit, daß sich die konkave Wölbung der Planscheibenoberseite während des Betriebes ständig verändert und sich daher nicht durch die vorstehend geschilderten Maßnahmen ausgleichen läßt.

Der Erfindung liegt die Aufgabe zugrunde, Senkrechtdreh- und/oder -fräsmaschinen so zu verbessern, daß sich die Planscheibenoberseite nicht aufgrund von Temperaturunterschieden Zwischen der Ober- und der Unterseite in einem die Bearbeitungsgenauigkeit beeinträchtigendem Maße verformt.

Ausgehend von dieser Aufgabenstellung wird bei einer Senkrechtdreh- und/oder -fräsmaschine der eingangs erwähnten Art vorgeschlagen, daß die Unterseite der Planscheibe erfindungsgemäß mit Raumluft belüftet und/oder ein oder mehrere Abstandselemente zwischen der Planscheibe und einem Axiallager für die Planscheibe und/oder eine sich von einem Radiallager bis zu den Abstandselementen erstreckende Radialfläche mit Kühlschmiermittel beaufschlagt werden. Diese Belüftung der Unterseite der Planscheibe mit Raumluft bzw. die Beaufschlagung der Abstandselemente und/oder der Radialfläche mit Kühlschmiermittel können bei einer Senkrechtdreh- und/oder -fräsmaschine mit einem Untersatz, einem auf dem Untersatz angeordneten, um eine senkrechte Achse drehend angetriebenen Zahnrad, einer mit dem Zahnrad drehfest verbundenen Planscheibe, einem Radiallager und einem Axiallager für die Planscheibe erfindungsgemäß über einen nach innen und außen offenen Luftspalt, der zwischen dem Axiallager und der Planscheibe mittels der Abstandselemente gebildet wird, erfolgen.

Die Erfindung geht von der Überlegung aus, daß sich die Temperaturdifferenz zwischen der Planscheibenoberseite und -unterseite dadurch verringern läßt, daß die Unterseite in der gleichen Weise wie die Oberseite einer Belüftung mit Raumluft von gleicher Temperatur ausgesetzt wird und/oder das oder die Abstandselemente und/oder die Radialfläche mit Kühlschmiermittel beaufschlagt werden, so daß ein großer Teil der von dem Radial- und dem Axiallager sowie dem Antrieb entwickelten Wärme durch die Belüftung und/oder die Beaufschlagung mit Kühlschmiermittel abgeführt wird.

Die Belüftung der Planscheibenunterseite und/oder die Beaufschlagung mit Kühlschmiermittel kann sich in einfacher Weise an die augenblickliche Wärmeentwicklung anpassen und folgen daher flexibel jeder Veränderung, so daß auch bei einer instationären Betriebsweise keine oder nur geringfügige Temperaturdifferenzen zwischen Planscheibenoberseite und -unterseite auftreten.

Vorzugsweise kann sich der Luftspalt von einer Zentrierbuchse für die Planscheibe bis zu Ihrem Außenumfang erstrecken, so daß eine Belüftung der gesamten Planscheibenunterseite gewährleistet ist.

Es wurde festgestellt, daS eine Höhe des Luftspalts von etwa 75 mm bei einem Planscheibendurchmesser von 4,5 m ausreicht, um eine wirkungsvolle Belüftung zu erreichen.

Um eine radiale Auswärtsströmung entlang der Planscheibenunterseite zu erreichen, können im Bereich der Zentrierbuchse Öffnungen für eine Raumluftzufuhr zum Luftspalt angeordnet sein.

Die durch die Drehung der Planscheibe bewirkte, radial nach auswärts gerichtete Luftströmung im Luftspalt läßt sich zusätzlich dadurch beeinflussen, daß im Luftspalt sich mit der Planscheibe drehende, als Radialschaufeln wirkende Einbauten angeordnet werden, die aus den Abstandselementen selber, durch Radialstege oder durch Radialschaufeln bildende Blecheinsätze gebildet sein können.

Gemäß einer Ausführungsform der Erfindung kann die Planscheibe auf dem Zahnrad befestigt sein, können die Abstandselemente zwischen dem Zahnrad und der Planscheibe, das Radiallager zwischen einem Königszapfen am Untersatz und dem Zahnrad sowie das Axiallager im Bereich der Peripherie des Zahnrades zwischen diesem und dem Untersatz angeordnet sein. Bei dieser Ausführungsform können die Abstandselemente aus zwischen dem Zahnrad und der Planscheibe oberhalb des Axiallagers angeordneten Abstandsblöcken bestehen, wobei die Zentrierbuchse im Bereich des Zentrallagers mit dem Zahnrad sowie ein eine Labyrinthdichtung aufweisender Abstandsring im Bereich des Axiallagers mit dem Zahnrad verschraubt sind und die Abstandsblöcke zwischen dem Abstandsring und der Planscheibe angeordnet sind. Dabei kann sich von der Oberseite des Abstandsrings bis zu der Zentrierbuchse eine Blechabdeckung erstrecken. Diese Ausführungsform ist dazu geeignet, vorhandene Konstruktionen einer Senkrechtdreh- und/oder -fräsmaschine nachträglich mit einem Luftspalt für die Belüftung der Planscheibenunterseite zu versehen.

Die Zentrierbuchse und die Abstandselemente in Form eines Abstandsringes können jedoch auch einstückig mit dem Zahnrad oder der Planscheibe hergestellt sein und Radialkanäle für eine Luftzirkulation zwischen dem Luftspalt und der Raumluft in dem Abstandsring und/oder der Zentrierbuchse aufweisen, wobei diese Konstruktion von Vorteil ist, wenn ein Serienbau von Werkzeugmaschinen mit höchsten Genauigkeitsanforderungen erfolgen soll.

Falls die Belüftung der Unterseite der Planscheibe allein aufgrund der durch den Luftspalt durch die Einbauten bewirkten Luftströmung nicht ausreicht, um in allen instationären Betriebszuständen eine geringe oder gar keine Temperaturdifferenz zwischen der Planscheibenoberseite oder -unterseite herbeizuführen, kann im Achsbereich der Planscheibe eine Zwangsbelüftung, z. B. in Form eines Raumluft durch die hohle Achse in den Luftspalt treibenden Lüfters angeordnet sein. Dabei kann der Durchsatz durch den Lüfter und den Luftspalt in Abhängigkeit vom Betriebszustand regelbar sein.

Des weiteren läßt sich die Wärmeentwicklung durch die Lager der Planscheibe durch eine Zufuhr temperierten Öls wenigstens zu den Lagerringen des Axiallagers beeinflussen. Dabei kann die Zufuhr vorzugsweise aus einer äußeren, das Axiallager umfassenden Ringleitung mit auf das Axiallager gerichteten Kühlöldüsen sowie zwei inneren, konzentrisch zum Axiallager angeordneten Ringleitungen mit von innen auf das Axiallager gerichteten Kühlöldüsen bestehen.

Um zu vermeiden, daß Kühlmittel und/oder Späne in den Bereich der Antriebsverzahnung des Luftspalts und/oder der Lager gelangen, kann eine ringförmige Kühlmittel- und/oder Späneauffangwanne zwischen der Labyrinthdichtung und dem Außenumfang der Planscheibe angeordnet sein.

Des weiteren läßt sich der Wärmeübergang von den Lagern, insbesondere dem Axiallager zur Planscheibe durch eine zwischen der Planscheibenunterseite und den Abstandselementen und/oder zwischen den Abstandselementen und dem Zahnrad angeordneten Wärmedämmschicht, z. B. aus Kunststoff, verringern.

Die Beaufschlagung der Radialfläche zwischen dem Radiallager und dem oder den Abstandselementen mit Kühlschmiermittel läßt sich durch eine durch den Königszapfen geführte Kühlschmiermittelleitung, einen Ringkanal im Bereich der Mündung der Kühlschmiermittelleitung und Radialkanälen vom Ringkanal zum Luftspalt bewirken.

Die Beaufschlagung wenigstens eines Teilbereichs der Radialfläche und/oder der Abstandselemente mit Kühlschmiermittel läßt sich auch oder zusätzlich durch feststehende, von außen auf die Abstandselemente und/oder die Radialfläche gerichtete Kühlschmiermitteldüsen bewirken. Vorzugsweise wird die Temperatur des Kühlschmiermittels und/oder die des Kühlöls mittels eines Temperiergeräts eingestellt.

Die Erfindung wird nachstehend anhand eines in der Zeichnung dargestellten Ausführungsbeispiels des näheren erläutert. In der Zeichnung zeigen:

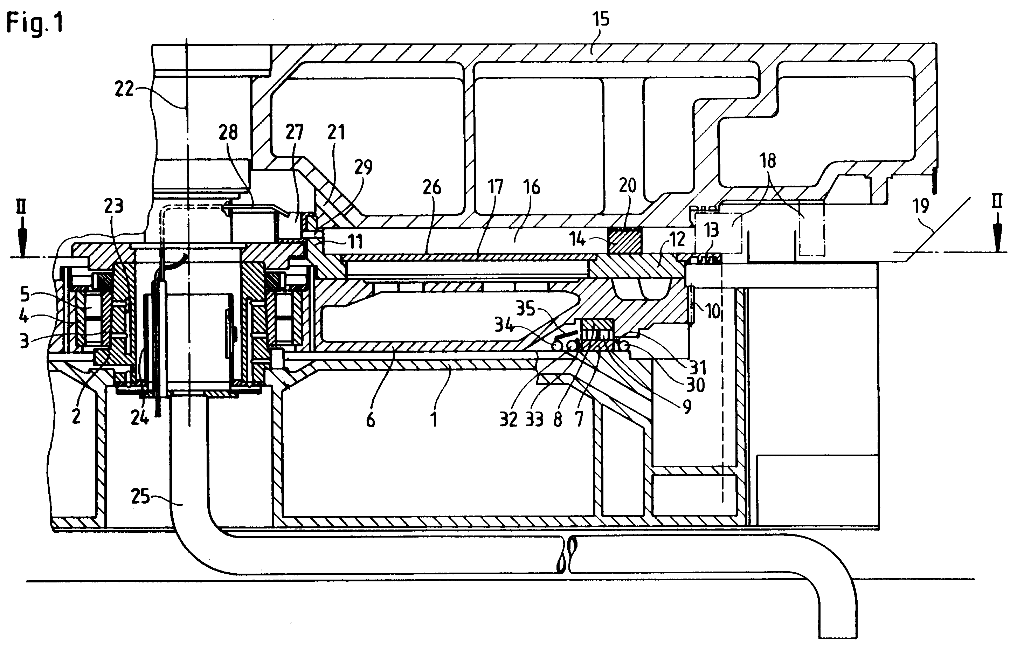

- Fig. 1: eine Teilansicht im Schnitt einer Planscheibe mit Untersatz und
- Fig. 2: eine schematische Draufsicht entlang II - II in Fig. 1.

Von einer Senkrechtdreh- und/oder -fräsmaschine ist nur ein Teilschnitt des Bereichs dargestellt, der die Erfindung betrifft. Ein auf einem Fundament angeordneter Untersatz 1 weist einen Königszapfen 2 auf, der über einen inneren Lagerring 3, einen äußeren Lagerring 4 und Rollen 5, die ein Radiallager bilden, ein Zahnrad 6 radial führt. Das Zahnrad 6 ruht in axialer Richtung auf dem Untersatz über einen unteren Lagerring 7, einen oberen Lagerring 8 und Rollen 9, die als Axiallager zur Aufnahme der Last einer Planscheibe 15 und darauf angeordneter Werkstücke dienen.

Das Zahnrad 6 wird über eine Verzahnung 10 von einem im einzelnen nicht dargestellten Antrieb in Drehung versetzt. Im Bereich des Radiallagers 3, 4, 5 ist an das Zahnrad 6 eine Zentrierbuchse 11 geschraubt, während oberhalb des Axiallagers 7, 8, 9 ein Abstandsring 12 mit einer nach außen ragenden Labyrinthdichtung 13 an das Zahnrad 6 geschraubt ist. An den Abstandsring 12 sind, regelmäßig auf dem Umfang verteilt, Abstandsböcke 14 geschraubt, die als Träger für eine Planscheibe 15 dienen. Diese Planscheibe 15 ist mittels der Zentrierbuchse 11 gegenüber dem Zahnrad 6 zentriert und läuft mit dem Zahnrad 6 um.

Durch die Abstandsböcke 14 ist zwischen dem Zahnrad 6 und der Planscheibenunterseite ein Luftspalt 16 gebildet.

Zwischen einem Flansch an der Zentrierbuchse 11 und dem Abstandsring 12 ist eine Abdeckscheibe 17 angeordnet, die den Hohlraum darunter und den hohlen Bereich des Zahnrades 6 flüssigkeitsdicht verschließt.

Im Nabenbereich der Planscheibe 15 sind Radialbohrungen 21 angeordnet, die einen freien Luftdurchtritt der Raumluft vom Nabenbereich zum Luftspalt 16 und zur Peripherie der Planscheibe 15 hin gewährleisten.

Durch die Drehung der Planscheibe 15 entsteht sowohl auf der Planscheibenoberseite als auch -unterseite ein radial nach außen gerichteter Luftstrom der Raumluft, die auf beiden Seiten die gleiche Temperatur aufweist und für einen Temperaturausgleich zwischen der Planscheibenoberseite und -unterseite sorgt. Dabei können die Abstandsböcke 14 wie die Radialschaufeln eines Radialgebläses wirken bzw. für eine ausreichende Luftverwirbelung im Luftspalt 16 sorgen. Zusätzlich können radiale Blecheinsätze 18 im Luftspalt 16 im Bereich der Peripherie der Planscheibe 15 angeordnet sein, die den Radialgebläseeffekt noch verstärken. Auf diese Weise läßt sich eine drehzahlabhängige Radialströmung der Luft im Luftspalt 16 erzeugen, wodurch eine direkte Anpassung an Drehzahländerungen gegeben ist.

Um die Labyrinthdichtung 13 sowie die Verzahnung 10 und die Lager 3, 4, 5; 7, 8, 9 gegen das Eindringen von Kühlmittel und Spänen zu schützen, ist um die Labyrinthdichtung 13 herum eine ringförmige Kühlmittel- und Späneauffangwanne 19 angeordnet.

Die Wärmeübertragung vom Zahnrad 6 zur Planscheibe 15 läßt sich zusätzlich dadurch vermindern, daß in der Zentrierbuchse 11 ein Ringkanal 27 angeordnet wird, dem über eine Kühlschmiermittelleitung 28 Kühlschmiermittel zugeführt wird. Von dem Ringkanal 27 führen Radialkanäle 29 durch die Zentrierbuchse 11 hindurch, so daß Kühlschmiermittel auf die Radialfläche 26 der Abdeckscheibe 17 gelangt. Das zugeführte Kühlschmiermittel ist temperiert und sorgt dafür, daß wenigstens ein Teil der durch den Antrieb des Zahnrades 6 und in den Lagern erzeugten Wärme durch das Kühlschmiermittel abgeführt wird. Durch eine Entkoppelung der Planscheibe 15 vom Zahnrad 6 mittels einer zwischen der Oberseite der Abstandsböcke 14 und der Unterseite der Planscheibe 15 angeordneten Wärmedämmschicht, vorzugsweise aus Kunststoff, wird der Wärmeübergang zur Planscheibe 15 zusätzlich vermindert. Bei einer Dicke von etwa 2 mm verhindert diese Wärmedämmschicht 20 bereits in starkem Maße ein Aufheizen der Planscheibenunterseite über die Abstandsböcke 14, so daß die Luftbewegung im Luftspalt 16 durch die Zufuhr von Raumluft mit derselben Temperatur wie auf der Oberseite der Planscheibe 15 dafür sorgt, daß sich praktisch keine Temperaturdifferenz zwischen der Planscheibenoberseite und -unterseite einstellt.

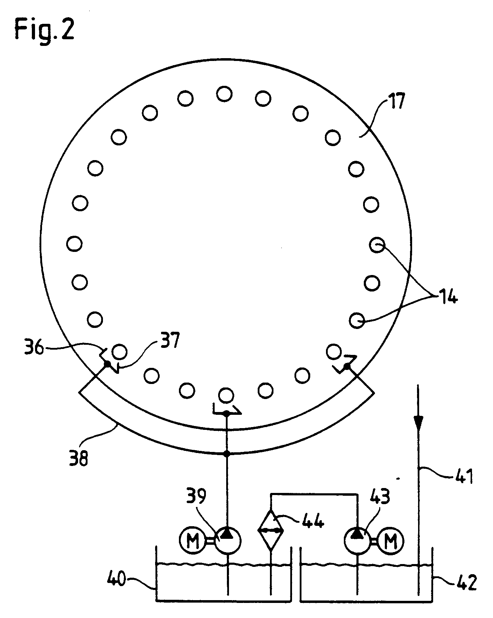

Zusätzlich zu oder anstelle der Beaufschlagung der Oberfläche 26 der Abdeckscheibe 17 mit Kühlschmiermittel können auf die Abdeckscheibe 17 gerichtete Düsen 36 und/oder auf die Abstandsböcke 14 gerichtete Düsen 37, wie in Fig. 2 dargestellt, vorgesehen sein. Diese Düsen 36, 37 sind über eine Verteilerleitung 38 mit einer Pumpe 39 verbunden, die temperiertes Kühlschmiermittel aus einem Behälter 40 ansaugt. Der Rücklauf des Kühlschmiermittels erfolgt über eine Leitung 41 von der Auffangwanne 19 zu einem weiteren Behälter 42, von wo das Kühlschmiermittel über eine Pumpe 43 und ein Temperiergerät 44 in den Behälter 40 umgepumpt wird. Mittels des Temperiergeräts 44, das durch nicht dargestellte Temperaturfühler gesteuert wird, wird das Kühlschmiermittel auf die benötigte Temperatur gebracht. Die durch den Königszapfen 2 geführte Kühlschmiermittelleitung 28 kann ebenfalls mit der Pumpe 39 verbunden sein, so daß die Radialfläche 26 der Abdeckscheibe 17 von innen und der Randbereich der Abdeckscheibe 17 sowie die Abstandsböcke 14 von außen mit Kühlschmiermittel beaufschlagt werden.

Eine Verminderung der Wärmeentwicklung im Radiallager 3, 4, 5 und im Axiallager 7, 8, 9 läßt sich dadurch erreichen, daß temperiertes Öl über Ölkanäle 23 den Lagerringen 3, 4 des Radiallagers und über Ringleitungen 30, 32, 34 mit Düsen 31, 33, 35 den Lagerringen 7, 8 des Axiallagers zugeleitet wird. Hierbei ist dafür Sorge zu tragen, daß nur eine genau dosierte Ölmenge in den Bereich der Lagerrollen 5, 9 gelangt, da sich sonst aufgrund von Planschverlusten eine vergrößerte Wärmeentwicklung, d. h. das Gegenteil dessen, was man erreichen will, einstellen würde.

Aus diesem Grunde ist die Förderleistung der Ringleitungen 32, 34 unterschiedlich, so daß bei Stillstand der Planscheibe 15 eine größere Menge Kühlöl über eine der Ringleitungen 32, 34 sowie die äußere Ringleitung 30 zugeführt wird, während im Betrieb die Ringleitung 32, 34 mit dem größeren Durchsatz abgeschaltet wird und die Ringleitung 32, 34 mit dem kleineren Durchsatz eingeschaltet wird. Die äußere Ringleitung 30 fördert ununterbrochen sowohl bei Planscheibenstillstand als auch im Betrieb temperiertes Öl zum Axiallager 7, 8, 9.

Der Ölrücklauf aus dem Bereich des Radiallagers 4, 5, 6 erfolgt über ein im hohlen Konigszapfen 2 angeordnetes Standrohr 24, das als Überlauf wirkt und mit einer Ölrückführungsleitung 25 verbunden ist. Der Ölrücklauf vom Axiallager 7, 8, 9 erfolgt in nicht dargestellter Weise durch entsprechende Kanäle im Untersatz 1.

Eine genaue Regelung der Luftströmung im Luftspalt 16 läßt sich erreichen, wenn ein nicht dargestellter Lüfter Raumluft durch den hohlen Königszapfen 2 und die Radialbohrungen 21 in den Luftspalt 16 bläst. In diesem Fall ist die Luftströmung im Luftspalt 16 unabhängig von der Drehzahl der Planscheibe 15, da nicht die Planscheibe 15 selber die Luftströmung bewirkt. Durch Regelung des Luftdurchsatzes läßt sich auf diese Weise eine schnelle und genaue Anpassung an die Drehzahl und Belastung der Planscheibe 15 erreichen, so daß praktisch keine Temperaturdifferenz zwischen der Planscheibenoberseite und -unterseite vorhanden ist und somit auch keine konkave Wölbung der Planscheibenoberseite entstehen kann, unabhängig davon, ob sich die Werkzeugmaschine in einem stationären oder instationären Betriebszustand befindet.

Das beschriebene Ausführungsbeispiel bezieht sich auf eine Senkrechtdreh- und/oder -fräsmaschine, die nachträglich mit dem erfindungsgemaßen Luftspalt 16 versehen wurde, indem zwischen das Zahnrad 6 und die Planscheibe 15 die Zentrierbuchse 11 koaxial zur senkrechten Drehachse 22 sowie der Abstandsring 12 und die Abstandsböcke 14 im Bereich des Axiallagers 7, 8, 9 angeordnet wurden. Die Höhe des Luftspalts beträgt in diesem Fall etwa 75 mm für einen Planscheibendurchmesser von 4,5 m, wobei die Planscheibenoberseite gegenüber der ursprünglichen Ausführung etwa 150 mm höher liegt. Soll die vorherige Arbeitshöhe der Werkzeugmaschine gewahrt bleiben, müßte der Untersatz 1 um etwa 150 mm tiefer gelegt werden.

Im Falle einer Serienproduktion von Senkrechtdreh- und/oder -fräsmaschinen lassen sich die Zentrierbuchse 11, der Abstandsring 12 und die Abstandsböcke 14 einstückig mit dem Zahnrad 6 oder der Planscheibe 15 herstellen, wenn nur dafür gesorgt wird, daß sich zwischen der Oberseite des Zahnrades 6 und der Unterseite der Planscheibe 15 ein ausreichend hoher Luftspalt 16 befindet und eine freie Luftbewegung durch Radialbohrungen 21 im Bereich der Habe der Planscheibe 15 und Radialkanäle im Bereich oberhalb des Axiallagers 7, 8, 9 gewährleistet ist.

## Patentansprüche

1. Senkrechtdreh- und/oder -fräsmaschine mit einem Untersatz (1), einem auf dem Untersatz (1) angeordneten, um eine senkrechte Achse (22) drehend angetriebenen Zahnrad (6), einer mit dem Zahnrad (6) drehfest verbundenen Planscheibe (15), einem Radiallager (3, 4, 5) und einem Axiallager (7, 8, 9) für die Planscheibe (15), **gekennzeichnet durch** wenigstens ein, einen nach innen und außen offenen Luftspalt (16) zwischen dem Axiallager (7, 8, 9) und der Planscheibe (15) bildendes Abstandselement (12, 14) und eine Belüftung (16) der Unterseite der Planscheibe (15) mit Raumluft und/oder eine Beaufschlagung des Abstandselements (12, 14) und/oder einer sich vom Radiallager (3, 4, 5) bis zu dem Abstandselement (12, 14) erstreckenden Radialfläche (26) mit Kühlschmiermittel.

2. Senkrechtdreh- und/oder -fräsmaschine nach Anspruch 1, **dadurch gekennzeichnet**, daß sich der Luftspalt (16) von einer Zentrierbuchse (11) für die Planscheibe (15) bis zu ihrem Außenumfang erstreckt.

3. Senkrechtdreh- und/oder -fräsmaschine nach Anspruch 1 oder 2, **dadurch gekennzeichnet**, daß die Höhe des Luftspalts (16) bei einem Planscheibendurchmesser von 4,5 m etwa 75 mm beträgt.

4. Senkrechtdreh- und/oder -fräsmaschine nach Anspruch 1, 2 oder 3, **dadurch gekennzeichnet**, daß im Bereich der Zentrierbuchse (11) Öffnungen (21) für eine Raumluftzufuhr zum Luftspalt (16) angeordnet sind.

5. Senkrechtdreh- und/oder -fräsmaschine nach einem der Ansprüche 1 bis 4, **dadurch gekennzeichnet**, daß im Luftspalt (16) als sich mit der Planscheibe drehende Radialschaufeln wirkende Einbauten (14, 18) angeordnet sind.

6. Senkrechtdreh- und/oder -fräsmaschine nach Anspruch 5, **dadurch gekennzeichnet**, daß die Radialschaufeln durch die Abstandselemente (14) gebildet sind.

7. Senkrechtdreh- und/oder -fräsmaschine nach Anspruch 5, **dadurch gekennzeichnet**, daß die Radialschaufeln durch Radialstege (18) gebildet sind.

8. Senkrechtdreh- und/oder -fräsmaschine nach Anspruch 7, **dadurch gekennzeichnet**, daß die Radialstege aus Blecheinsätzen (18) gebildet sind.

9. Senkrechtdreh- und/oder -fräsmaschine nach einem oder mehreren der Ansprüche 1 bis 8, **dadurch gekennzeichne**t, daß die Planscheibe (15) auf dem Zahnrad (6) befestigt ist, die Abstandselemente (12, 14) zwischen dem Zahnrad (6) und der Planscheibe (15), das Radiallager (4, 5, 6) zwischen einem Königszapfen (2) am Untersatz (1) und dem Zahnrad (6) sowie das Axiallager (7, 8, 9) im Bereich der Peripherie des Zahnrades (6) zwischen diesem und dem Untersatz (1) angeordnet sind.

10. Senkrechtdreh- und/oder -fräsmaschine nach Anspruch 9, **dadurch gekennzeichnet**, daß die Abstandselemente aus zwischen dem Zahnrad (6) und der Planscheibe (15) oberhalb des Axiallagers (7, 8, 9) angeordneten Abstandsböcken (14) bestehen.

11. Senkrechtdreh- und/oder -fräsmaschine nach Anspruch 10, **dadurch gekennzeichnet**, daß die Zentrierbuchse (11) im Bereich des Radiallagers (3, 4, 5) mit dem Zahnrad (6), ein eine Labyrinthdichtung (13) aufweisender Abstandsring (12) im Bereich des Axiallagers (7, 8, 9) mit dem Zahnrad (6) verschraubt sind und die Abstandsböcke (14) zwischen dem Abstandsring (12) und der Planscheibe (15) angeordnet sind.

12. Senkrechtdreh- und/oder -fräsmaschine nach Anspruch 11, **dadurch gekennzeichnet**, daß sich von der Oberseite des Abstandsrings (12) zu der Zentrierbuchse (11) eine Blechabdeckung (17) erstreckt.

13. Senkrechtdreh- und/oder -fräsmaschine nach Anspruch 9 **dadurch gekennzeichnet**, daß die Zentrierbuchse (11) und die Abstandselemente als Abstandsring einstückig mit dem Zahnrad (6) oder der Planscheibe (15) hergestellt sind und Radialkanäle für eine Luftzirkulation zwischen dem Luftspalt (16) und der Raumluft in dem Abstandsring und/oder in der Zentrierbuchse angeordnet sind.

14. Senkrechtdreh- und/oder -fräsmaschine nach einem oder mehreren der Ansprüche 1 bis 13, **gekennzeichnet durch** eine im Achsbereich der Planscheibe (15) eintretende Zwangsbelüftung des Luftspalts (16).

15. Senkrechtdreh- und/oder -fräsmaschine nach einem oder mehreren der Ansprüche 1 bis 14, **gekennzeichnet durch** eine Zufuhr (30 bis 35) temperierten Öls wenigstens zu den Lagerringen (7, 8) des Axiallagers (7, 8, 9).

16. Senkrechtdreh- und/oder -fräsmaschine nach Anspruch 15, **dadurch gekennzeichnet**, daß die Zufuhr temperierten Öls aus einer äußeren, das Axiallager (7, 8, 9) umfassenden Ringleitung (30) mit auf das Axiallager (7, 8, 9) gerichteten Kühlöldüsen (31) sowie zwei inneren, konzentrisch zum Axiallager (7, 8, 9) angeordneten Ringleitungen (32, 34) mit auf das Axiallager (7, 8, 9) gerichteten Kühlöldüsen (33, 35) besteht.

17. Senkrechtdreh- und/oder -fräsmaschine nach einem oder mehreren der Ansprüche 1 bis 16, **gekennzeichnet durch** eine zwischen der Labyrinthdichtung (13) und dem Außenumfang der Planscheibe (15) angeordneten ringförmige Kühlmittel- und Späneauffangwanne (19).

18. Senkrechtdreh- und/oder -fräsmaschine nach einem der Ansprüche 1 bis 17, **gekennzeichnet durch** eine zwischen der Planscheibe (15) und den Abstandselementen (12, 14) und/oder zwischen den Abstandselementen (12, 14) und dem Zahnrad (6) angeordneten Wärmedämmschicht (20).

19. Senkrechtdreh- und/oder -fräsmaschine nach einem oder mehreren der Ansprüche 1 bis 18, **gekennzeichnet durch** eine durch den Königszapfen (2) geführte Kühlschmiermittelleitung (28), einen Ringkanal (27) im Bereich der Mündung der Kühlschmiermittelleitung (28) und Radialkanälen (29) vom Ringkanal (27) zum Luftspalt (16).

20. Senkrechtdreh- und/oder -fräsmaschine nach einem oder mehreren der Ansprüche 1 bis 19, **gekennzeichnet durch** feststehende, von außen auf die Abstandselemente (12, 14) und/oder die Radialfläche (26) gerichtete Kühlschmiermitteldüsen (36, 37).

21. Senkrechtdreh- und/oder -fräsmaschine nach einem oder mehreren der Ansprüche 1 bis 20, **gekennzeichnet durch** ein Temperiergerät (44) für das Kühlschmiermittel und/oder das Kühlöl.

## Claims

1. Vertical turning and/or milling machine having a base (1), a toothed wheel (6), which is arranged on the base (1) and is driven in rotation about a vertical axis (22), a face plate (15), which is connected to the toothed wheel (6) in a fixed manner with respect to rotation, a radial bearing (3, 4, 5) and an axial bearing (7, 8, 9) for the face plate (15), characterised by at least one spacing element (12, 14), which forms an air gap (16), which is open towards the inside and outside, between the axial bearing (7, 8, 9) and the face plate (15), and by ventilation (16) of the underside of the face plate (15) with ambient air and/or application of a cooling lubricant to the spacing element (12, 14) and/or a radial surface (26) extending from the radial bearing (3, 4, 5) as far as the spacing element (12, 14).

2. Vertical turning and/or milling machine according to claim 1, characterised in that the air gap (16) extends from a centering bushing (11) for the face plate (15) as far as its outer periphery.

3. Vertical turning and/or milling machine according to claim 1 or 2, characterised in that the height of the air gap (16), given a face plate diameter of 4.5 m, amounts to approximately 75 mm.

4. Vertical turning and/or milling machine according to claim 1, 2 or 3, characterised in that openings (21) for supplying ambient air to the air gap (16) are arranged in the region of the centering bushing (11).

5. Vertical turning and/or milling machine according to one of the claims 1 to 4, characterised in that built-in components (14, 18), which act as radial blades that rotate with the face plate, are arranged in the air gap (16).

6. Vertical turning and/or milling machine according to claim 5, characterised in that the radial blades are formed by the spacing elements (14).

7. Vertical turning and/or milling machine according to claim 5, characterised in that the radial blades are formed by radial webs (18).

8. Vertical turning and/or milling machine according to claim 7, characterised in that the radial webs are formed from sheet-metal inserts (18).

9. Vertical turning and/or milling machine according to one or a plurality of claims 1 to 8, characterised in that the face plate (15) is secured to the toothed wheel (6), the spacing elements (12, 14) are arranged between the toothed wheel (6) and the face plate (15), the radial bearing (4, 5, 6) is arranged between a king pin (2) on the base (1) and the toothed wheel (6) and in addition the axial bearing (7, 8, 9) is arranged in the region of the periphery of the toothed wheel (6) between the latter and the base (1).

10. Vertical turning and/or milling machine according to claim 9, characterised in that the spacing elements consist of spacing supports (14) which are arranged between the toothed wheel (6) and the face plate (15) above the axial bearing (7, 8, 9).

11. Vertical turning and/or milling machine according to claim 10, characterised in that the centering bushing (11) is screwed together with the toothed wheel (6) in the region of the radial bearing (3, 4, 5), a spacing ring (12), which has a labyrinth seal (13), is screwed together with the toothed wheel (6) in the region of the axial bearing (7, 8, 9), and the spacing supports (14) are arranged between the spacing ring (12) and the face plate (15).

12. Vertical turning and/or milling machine according to claim 11, characterised in that a sheet-metal cover (17) extends from the upper side of the spacing ring (12) to the centering bushing (11).

13. Vertical turning and/or milling machine according to claim 9, characterised in that the centering bushing (11) and the spacing elements as a spacing ring are produced in one piece with the toothed wheel (6) or the face plate (15), and radial channels for air circulation are arranged between the air gap (16) and the ambient air in the spacing ring and/or in the centering bushing.

14. Vertical turning and/or milling machine according to one or a plurality of the claims 1 to 13, characterised by forced ventilation of the air gap (16) occurring in the axial region of the face plate (15).

15. Vertical turning and/or milling machine according to one or a plurality of the claims 1 to 14, characterised by a supply (30 to 35) of temperature-controlled oil at least to the bearing rings (7, 8) of the axial bearing (7, 8, 9).

16. Vertical turning and/or milling machine according to claim 15, characterised in that the means of supply of temperature-controlled oil consists of an outer ring line (30) which embraces the axial bearing (7, 8, 9) and has cooling oil nozzles (31), which are directed at the axial bearing (7, 8, 9), and also of two inner ring lines (32, 34) which are arranged so as to be concentric to the axial bearing (7, 8, 9) and have cooling oil nozzles (33, 35) which are directed at the axial bearing (7, 8, 9).

17. Vertical turning and/or milling machine according to one or a plurality of the claims 1 to 16, characterised by an annular coolant- and chip-collecting trough (19) which is arranged between the labyrinth seal (13) and the outer periphery of the face plate (15).

18. Vertical turning and/or milling machine according to one of the claims 1 to 17, characterised by a heat-insulating layer (20), which is arranged between the face plate (15) and the spacing elements (12, 14) and/or between the spacing elements (12, 14) and the toothed wheel (6).

19. Vertical turning and/or milling machine according to one or a plurality of the claims 1 to 18, characterised by a cooling lubricant line (28) which is guided through the king pin (2), an annular channel (27) in the region of the mouth of the cooling lubricant line (28) and radial channels (29) from the annular channel (27) to the air gap (16).

20. Vertical turning and/or milling machine according to one or a plurality of the claims 1 to 19, characterised by fixed cooling lubricant nozzles (36, 37) which are directed from without at the spacing elements (12, 14) and/or at the radial surface (26).

21. Vertical turning and/or milling machine according to one or a plurality of the claims 1 to 20, characterised by a temperature stabilizer (44) for the cooling lubricant and/or the cooling oil.

## Revendications

1. Tour et/ou fraiseuse verticale, avec un socle (1), une roue dentée (6) disposée sur le socle (1), entraînée en rotation autour d'un axe (22) vertical, un disque plan (15) relié de façon assujettie en rotation à la roue dentée (6), un palier radial (3, 4, 5) et un palier axial (7, 8, 9) pour le disque plan (15), caractérisé par au moins un élément d'espacement (12, 14) constituant un entrefer (16), ouvert vers l'intérieur et l'extérieur entre le palier axial (7, 8, 9) et le disque plan (15), et une aération (16) de la face inférieure du disque plan (15) avec l'air ambiant et/ou une alimentation de l'élément d'espacement (12, 14) et/ou d'une surface radiale (26) s'étendant du palier radial (3, 4, 5) jusqu'à l'élément d'espacement (12, 14), par un produit de lubrification et de refroidissement.

2. Tour et/ou fraiseuse verticale selon la revendication 1, caractérisé en ce que l'entrefer (16) s'étend d'une douille de centrage (11) destinée au disque plan (15) jusqu'à sa périphérie extérieure.

3. Tour et/ou fraiseuse verticale selon la revendication 1 ou 2, caractérisé en ce que la hauteur de l'entrefer (16) est d'environ 75 mm pour un diamètre de disque plan de 4,5 m.

4. Tour et/ou fraiseuse verticale selon la revendication 1, 2 ou 3, caractérisé en ce que des ouvertures (21) destinées à un apport d'air ambiant à l'entrefer (16) sont disposées dans la zone de la douille de centrage (11).

5. Tour et/ou fraiseuse verticale selon l'une des revendications 1 à 4, caractérisé en ce que des éléments de garnissage (14, 18), agissant comme des aubes radiales tournant avec le disque plan, sont disposés dans l'entrefer (16).

6. Tour et/ou fraiseuse verticale selon la revendication 5, caractérisé en ce que les aubes radiales sont constituées par les éléments d'espacement (14).

7. Tour et/ou fraiseuse verticale selon la revendication 5, caractérisé en ce que les aubes radiales sont constituées par des nervures radiales (18).

8. Tour et/ou fraiseuse verticale selon la revendication 7, caractérisé en ce que les nervures radiales sont constituées par des inserts en tôle (18).

9. Tour et/ou fraiseuse verticale selon l'une ou plusieurs des revendications 1 à 8, caractérisé en ce que le disque plan (15) est fixé sur la roue dentée (6), les éléments d'espacement (12, 14) sont disposés entre la roue dentée (6) et le disque plan (15), le palier radial (4, 5, 6) entre un tourillon central (2) sur le socle (1) et la roue dentée (6), ainsi que le palier axial (7, 8, 9) dans la zone de la périphérie de la roue dentée (6) entre celle-ci et le socle (1).

10. Tour et/ou fraiseuse verticale selon la revendication 9, caractérisé en ce que les éléments d'espacement sont constitués de blocs d'espacement (14) disposés entre la roue dentée (6) et le disque plan (15), au-dessus du palier axial (7, 8, 9).

11. Tour et/ou fraiseuse verticale selon la revendication 10, caractérisé en ce que la douille de centrage (11) est vissée, dans la zone du palier radial (3, 4, 5), à la roue dentée (6), un anneau d'espacement (12) présentant un joint d'étanchéité labyrinthe (13) est vissé, dans la zone du palier axial (7, 8, 9), à la roue dentée (6), et les blocs d'espacement (14) sont disposés entre l'anneau d'espacement (12) et le disque plan (15).

12. Tour et/ou fraiseuse verticale selon la revendication 11, caractérisé en ce qu'un recouvrement en tôle (17) s'étend de la face supérieure de l'anneau d'espacement (12) jusqu'à la douille de centrage (11).

13. Tour et/ou fraiseuse verticale selon la revendication 9, caractérisé en ce que la douille de centrage (11) et les éléments d'espacement sont fabriqués sous forme d'anneau d'espacement, d'une seule pièce avec la roue dentée ou le disque plan (15), et des canaux radiaux, destinés à une circulation d'air entre l'entrefer (16) et l'air ambiant, sont ménagés dans l'anneau d'espacement et/ou dans la douille de centrage.

14. Tour et/ou fraiseuse verticale selon l'une ou plusieurs des revendications 1 à 13, caractérisé par une aération forcée, entrant dans la zone d'axe du disque plan (15), de l'entrefer (16).

15. Tour et/ou fraiseuse verticale selon l'une ou plusieurs des revendications 1 à 14, caractérisé par un apport (30 à 35) d'huile à température régulée, au moins dans les bagues de palier (7, 8) du palier axial (7, 8, 9).

16. Tour et/ou fraiseuse verticale selon la revendication 15, caractérisé en ce que l'apport d'huile à température régulée se fait depuis une conduite annulaire (30) extérieure enclosant le palier axial (7, 8, 9) avec des buses d'huile de refroidissement (31) orientées en direction du palier axial (7, 8, 9), ainsi que deux conduites annulaires (32, 34) intérieures, disposée concentriquement par rapport au palier axial (7, 8, 9) avec des buses d'huile de refroidissement (33, 35) orientées en direction du palier axial (7, 8, 9).

17. Tour et/ou fraiseuse verticale selon l'une ou plusieurs des revendications 1 à 16, caractérisé par une auge de captage de fluide de refroidissement et de copeaux (19), de forme annulaire, disposée entre le joint d'étanchéité labyrinthe (13) et la périphérie extérieure du disque plan (15).

18. Tour et/ou fraiseuse verticale selon l'une des revendications 1 à 17, caractérisé par une couche d'isolation thermique (20) disposée entre le disque plan (15) et les éléments d'espacement (12, 14) et/ou les éléments d'espacement (12, 14) et la roue dentée (6).

19. Tour et/ou fraiseuse verticale selon l'une ou plusieurs des revendications 1 à 18, caractérisé par une conduite de fluide de lubrification et de refroidissement (28) passée à travers le tourillon central (2), un canal annulaire (27) ménagé dans la zone de l'embouchure de la conduite de fluide de lubrification et de refroidissement (28) et des canaux radiaux (29) allant du canal annulaire (27) à l'entrefer (16).

20. Tour et/ou fraiseuse verticale selon l'une ou plusieurs des revendications 1 à 19, caractérisé par des buses de fluide de lubrification et de refroidissement (36, 37) fixes, orientées de l'extérieur vers les éléments d'espacement (12, 14) et/ou la surface radiale (26).

21. Tour et/ou fraiseuse verticale selon l'une ou plusieurs des revendications 1 à 20, caractérisé par un appareil de régulation de température (44) conditionnant le fluide de lubrification et de refroidissement et/ou l'huile de refroidissement.
